# FASCICULE DE BREVET EUROPEEN

(11) **EP 4 638 275 B1**
(45) Date de publication et mention de la délivrance du brevet: **09.12.2026**
(21) Numéro de dépôt: 23836819.5
(22) Date de dépôt: 20.12.2023
(51) Int. Cl.: B64D 37/30, B64D 37/34, F02C 3/22, F02C 7/224

(54) **INSTALLATION DE RÉCHAUFFEMENT POUR UN AÉRONEF COMPORTANT UN RÉSERVOIR DE DIHYDROGÈNE, UN MOTEUR ET DES SYSTÈMES DE RÉCHAUFFEMENT DU DIHYDROGÈNE**
HEIZANLAGE FÜR EIN FLUGZEUG MIT EINEM WASSERSTOFFTANK, EINEM MOTOR UND WASSERSTOFFERHITZUNGSSYSTEMEN
HEATING SYSTEM FOR AN AIRCRAFT WITH A DIHYDROGEN TANK, AN ENGINE AND DIHYDROGEN HEATING SYSTEMS

(30) Priorité: 20.12.2022 FR 2213952
(43) Date de publication de la demande: 29.10.2025
(73) Titulaire: AIRBUS OPERATIONS, 31060 Toulouse Cedex 9 (FR); ARIANEGROUP SAS, 78130 Les Mureaux (FR)
(72) Inventeur: BELLEVILLE, Mathieu, 31060 TOULOUSE (FR); KLEINERMANN, Cédric, 31060 TOULOUSE (FR); MARTIN, Pierre-Olivier, 31060 TOULOUSE (FR); MENAGER, Simon, 27207 VERNON Cedex (FR); MABILLE DE LA PAUMELIERE, Louis Vianney, 27207 VERNON Cedex (FR); BRICHLER, Thierry, 77550 MOISSY-CRAMAYEL (FR); PARMENTIER, Nicolas Claude, 77550 MOISSY-CRAMAYEL (FR)
(74) Mandataire: Cabinet Le Guen Maillet
(86) Numéro de dépôt international: PCT/EP2023/087061
(87) Numéro de publication internationale: WO 2024/133533

(56) Documents cités:
- EP-A1- 4 056 475
- WO-A1-2022/023648
- CN-A- 1 556 009
- FR-A1- 3 110 937
- FR-A1- 3 123 890
- US-A1- 2008 006 743

## Description

### DOMAINE TECHNIQUE

La présente invention concerne une installation de réchauffement pour un aéronef comportant un réservoir de dihydrogène, un moteur consommant du dihydrogène et deux systèmes de réchauffement arrangés sur deux canalisations montées en parallèle pour réchauffer le dihydrogène sortant du réservoir avant son introduction dans le moteur. La présente invention concerne également un aéronef comportant une telle installation de réchauffement.

### ÉTAT DE LA TECHNIQUE ANTÉRIEURE

Un aéronef comporte classiquement des moteurs qui assurent le déplacement dudit aéronef. Ces moteurs sont classiquement alimentés avec un carburant afin de les faire fonctionner. Pour réduire l'empreinte carbone, il est connu d'utiliser du dihydrogène comme carburant pour faire fonctionner les moteurs.

Un aéronef comporte alors un réservoir dans lequel est stocké le dihydrogène en particulier liquide et un système de réchauffement qui assure en particulier le changement de phase du dihydrogène afin d'alimenter chaque moteur en dihydrogène gazeux.

Bien que de telles installations donnent satisfaction, il est nécessaire de trouver un arrangement où le réchauffement est redondant pour assurer en cas de besoin une plus grande disponibilité du dihydrogène au niveau du moteur.

Le document US-A-2008/006743 divulgue une installation de l'état de la technique.

### EXPOSÉ DE L'INVENTION

Un objet de la présente invention est de proposer une installation de réchauffement pour un aéronef comportant un réservoir de dihydrogène, un moteur et au moins deux systèmes de réchauffement arrangés sur des canalisations montées en parallèle pour réchauffer le dihydrogène sortant du réservoir avant son introduction dans le moteur.

À cet effet, selon l'invention, est proposée une installation de réchauffement pour un aéronef comportant un réservoir dans lequel est stocké du dihydrogène, un moteur, une unité de contrôle, une première canalisation d'apport fluidiquement connectée à la sortie du réservoir, et une deuxième canalisation d'apport fluidiquement connectée à l'entrée du moteur, l'installation de réchauffement comportant :
- une première canalisation de dérivation fluidiquement connectée entre la première canalisation d'apport et la deuxième canalisation d'apport, et
- une deuxième canalisation de dérivation fluidiquement connectée entre la première canalisation d'apport et la deuxième canalisation d'apport,

où sur chaque canalisation de dérivation sont montés en série de l'amont vers l'aval, une première vanne, un système de réchauffement et une deuxième vanne qui sont destinés à être commandés par l'unité de contrôle,
l'installation de réchauffement étant caractérisée en ce qu'au moins un des systèmes de réchauffement comporte un premier échangeur thermique traversé par la première canalisation de dérivation correspondante, un brûleur comportant une première entrée, une deuxième entrée et une sortie, une première sous-canalisation fluidiquement connectée entre la première canalisation de dérivation correspondante et la première entrée du brûleur, une deuxième sous-canalisation fluidiquement connectée entre une source d'air pressurisé et la deuxième entrée du brûleur, une canalisation d'extraction destinée à être fluidiquement connectée entre la sortie du brûleur et l'environnement extérieur et qui, entre ladite sortie et ledit environnement extérieur, traverse le premier échangeur thermique.

À cet effet, selon l'invention, est proposée une installation de réchauffement pour un aéronef comportant un réservoir dans lequel est stocké du dihydrogène, un moteur, une unité de contrôle, une première canalisation d'apport fluidiquement connectée à la sortie du réservoir, et une deuxième canalisation d'apport fluidiquement connectée à l'entrée du moteur, l'installation de réchauffement comportant :
- une première canalisation de dérivation fluidiquement connectée entre la première canalisation d'apport et la deuxième canalisation d'apport, et
- une deuxième canalisation de dérivation fluidiquement connectée entre la première canalisation d'apport et la deuxième canalisation d'apport,

où sur chaque canalisation de dérivation sont montés en série de l'amont vers l'aval, une première vanne, un système de réchauffement et une deuxième vanne qui sont destinés à être commandés par l'unité de contrôle,
l'installation de réchauffement étant caractérisée en ce qu'au moins un des systèmes de réchauffement comporte un échangeur thermique traversé par la canalisation de dérivation correspondante, une préchambre de combustion montée sur la canalisation de dérivation correspondante en aval dudit échangeur thermique, et une canalisation d'approvisionnement qui apporte de l'air dans la préchambre de combustion, où en sortie de la préchambre de combustion, la canalisation de dérivation traverse l'échangeur thermique pour rejoindre la deuxième vanne.

À cet effet, selon l'invention, est proposée une installation de réchauffement pour un aéronef comportant un réservoir dans lequel est stocké du dihydrogène, un moteur, une unité de contrôle, une première canalisation d'apport fluidiquement connectée à la sortie du réservoir, et une deuxième canalisation d'apport fluidiquement connectée à l'entrée du moteur, l'installation de réchauffement comportant :
- une première canalisation de dérivation fluidiquement connectée entre la première canalisation d'apport et la deuxième canalisation d'apport, et
- une deuxième canalisation de dérivation fluidiquement connectée entre la première canalisation d'apport et la deuxième canalisation d'apport,

où sur chaque canalisation de dérivation sont montés en série de l'amont vers l'aval, une première vanne, un système de réchauffement et une deuxième vanne qui sont destinés à être commandés par l'unité de contrôle,
l'installation de réchauffement étant caractérisée en ce qu'au moins un des systèmes de réchauffement comporte un premier échangeur thermique traversé par la première canalisation de dérivation correspondante, un deuxième échangeur thermique, une boucle dans laquelle circule un fluide caloporteur et qui traverse successivement le premier échangeur thermique et le deuxième échangeur thermique, un brûleur comportant une première entrée, une deuxième entrée et une sortie, une première sous-canalisation fluidiquement connectée entre la première canalisation de dérivation correspondante et la première entrée du brûleur, une deuxième sous-canalisation fluidiquement connectée entre une source d'air pressurisé et la deuxième entrée du brûleur, une canalisation d'extraction destinée à être fluidiquement connectée entre la sortie du brûleur et l'environnement extérieur et qui, entre ladite sortie et ledit environnement extérieur, traverse le deuxième échangeur thermique.

Ainsi, le circuit suivi par le dihydrogène est redondant. Selon les cas d'utilisation, il est alors possible de sélectionner l'une et/ou l'autre voie, par exemple lorsque l'aéronef est en vol de croisière ou en phase de décollage.

Avantageusement, la canalisation d'approvisionnement en air est destinée à être fluidiquement connectée entre un compresseur du moteur et la préchambre de combustion et, entre le moteur et la préchambre de combustion, le système de réchauffement comporte un refroidisseur et un compresseur installés sur la canalisation d'approvisionnement. Avantageusement, la source d'air pressurisé comporte une vanne à trois voies commandée par l'unité de contrôle dont une première voie de la vanne à trois voies est destinée à être fluidiquement connectée à une source d'air pressurisé, dont une deuxième voie de la vanne à trois voies est destinée à être fluidiquement connectée à un compresseur du moteur (108) et dont une troisième voie de la vanne à trois voies est fluidiquement connectée à la deuxième sous-canalisation.

Avantageusement, une turbine couplée à une génératrice électrique est arrangée sur la canalisation d'extraction entre l'environnement extérieur et, selon le cas, le premier échangeur thermique ou le deuxième échangeur thermique.

Avantageusement, les deux systèmes de réchauffement sont différents.

L'invention propose également un aéronef comportant :
- un réservoir dans lequel est stocké du dihydrogène,
- un moteur,
- une unité de contrôle,
- une première canalisation d'apport fluidiquement connectée à la sortie du réservoir,
- une deuxième canalisation d'apport fluidiquement connectée à l'entrée du moteur, et
- une installation de réchauffement selon l'une des variantes précédentes où la première canalisation de dérivation est fluidiquement connectée entre la première canalisation d'apport et la deuxième canalisation d'apport, et où la deuxième canalisation de dérivation est fluidiquement connectée entre la première canalisation d'apport et la deuxième canalisation d'apport.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une représentation schématique d'une installation de réchauffement,
[Fig. 3] est une représentation schématique d'une installation de réchauffement,
[Fig. 4] est une représentation schématique d'une installation de réchauffement selon une variante de réalisation de l'invention,
[Fig. 5] est une représentation schématique d'une installation de réchauffement selon une autre variante de réalisation de l'invention,
[Fig. 6] est une représentation schématique d'une installation de réchauffement selon encore une autre variante de réalisation de l'invention,
[Fig. 7] est une représentation schématique d'une installation de réchauffement,
[Fig. 8] est une représentation schématique d'une installation de réchauffement résultant d'une combinaison des variantes de la Fig. 3 et de la Fig. 6, et
[Fig. 9] est une représentation d'une architecture matérielle d'une unité de contrôle de l'aéronef.

### EXPOSÉ DÉTAILLE DE MODES DE RÉALISATION

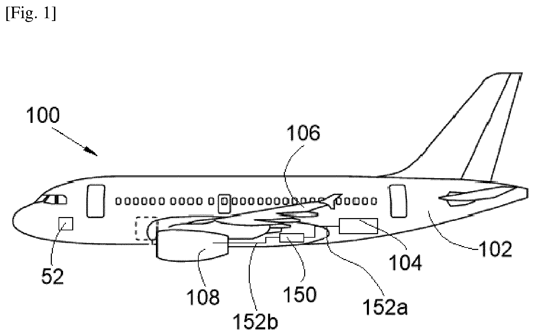

La Fig. 1 montre un aéronef 100 qui comporte un fuselage 102 à l'intérieur duquel est logé au moins un réservoir 104 dans lequel est stocké du dihydrogène en particulier liquide. L'aéronef 100 comporte également, de part et d'autre du fuselage 102, une aile 106 sous chacune desquelles est fixé au moins un moteur 108 fonctionnant avec du dihydrogène gazeux. Le moteur 108 est par exemple du type turboréacteur et comporte une chambre de combustion où le dihydrogène est brûlé, au moins un compresseur en amont de la chambre de combustion et au moins une turbine en aval de la chambre de combustion. Selon un mode de réalisation particulier, le compresseur du moteur 108 comporte un compresseur haute pression et un compresseur basse pression.

L'aéronef 100 comporte également une unité de contrôle 52, une première canalisation d'apport 152a fluidiquement connectée à la sortie du réservoir 104, et une deuxième canalisation d'apport 152b fluidiquement connectée à l'entrée du moteur 108 pour alimenter la chambre de combustion.

L'aéronef 100 comporte également une installation de réchauffement 150 selon l'invention, arrangée entre la première canalisation d'apport 152a et la deuxième canalisation d'apport 152b, pour réchauffer le dihydrogène sortant du réservoir 104 avant son introduction dans le moteur 108 et plus particulièrement dans la chambre de combustion du moteur 108.

Dans la description, les positions « amont » et « aval » sont à prendre par rapport au sens d'écoulement du fluide circulant dans les éléments concernés.

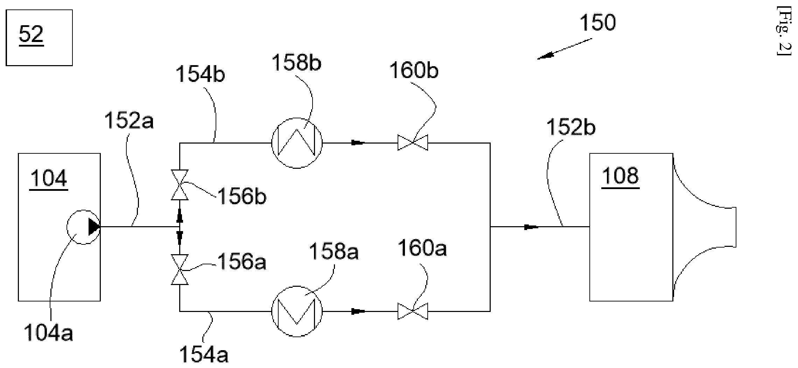

La Fig. 2 montre l'installation de réchauffement 150 entre le réservoir 104 et le moteur 108. Dans le mode général de l'invention, l'installation de réchauffement 150 comporte :
- une première canalisation de dérivation 154a fluidiquement connectée entre la première canalisation d'apport 152a et la deuxième canalisation d'apport 152b, et
- une deuxième canalisation de dérivation 154b fluidiquement connectée entre la première canalisation d'apport 152a et la deuxième canalisation d'apport 152b,
où sur chaque canalisation de dérivation 154a-b sont montés en série de l'amont vers l'aval, c'est-à-dire entre la première canalisation d'apport 152a et la deuxième canalisation d'apport 152b, une première vanne 156a-b, un système de réchauffement 158a-b et une deuxième vanne 160a-b.

Le dihydrogène s'écoule ainsi du réservoir 104 vers le moteur 108 en traversant successivement la première vanne 156a-b, le système de réchauffement 158a-b et la deuxième vanne 160a-b.

Toutes les vannes décrites ici peuvent être de tous les types (électrique, pneumatique, ...) du moment qu'elles peuvent être commandées par l'unité de contrôle 52.

L'unité de contrôle 52 commande ainsi chaque vanne 156a-b, 160a-b et chaque système de réchauffement 158a-b en fonction des besoins du moteur 108 en dihydrogène. L'unité de contrôle 52 commande entre autres l'ouverture ou la fermeture des vannes 156a-b et 160a-b en fonction des besoins.

La première canalisation d'apport 152a prélève du dihydrogène dans le réservoir 104. Le dihydrogène présent dans le réservoir 104 est sous pression, ce qui permet d'assurer le déplacement du dihydrogène entre le réservoir 104 et le moteur 108, mais en cas de besoin, un système de pressurisation 104a est mis en place au niveau de la sortie du réservoir 104 pour entraîner le dihydrogène dans la première canalisation d'apport 152a.

La deuxième canalisation d'apport 152b délivre du dihydrogène gazeux au niveau de l'entrée du moteur108. Le dihydrogène gazeux est délivré par exemple au niveau d'un système de dosage et d'injection du moteur 108 qui assure que la quantité de dihydrogène qui est injecté au niveau de la chambre de combustion du moteur 108 est celle nécessaire au bon fonctionnement dudit moteur 108.

La première canalisation de dérivation 154a et la deuxième canalisation de dérivation 154b sont ainsi montées en parallèle l'une par rapport à l'autre entre la première canalisation d'apport 152a et la deuxième canalisation d'apport 152b.

Chaque système de réchauffement 158a-b assure le réchauffement du dihydrogène qui passe dans la canalisation de dérivation 154a-b associée pour assurer le changement de phase du dihydrogène.

Une telle installation de réchauffement 150 est redondante puisque le dihydrogène peut passer par l'une et/ou l'autre des canalisations de dérivation 154a-b en fonction des besoins de l'aéronef 100, et ce choix s'effectue par l'intermédiaire de l'unité de contrôle 52 qui commande chaque vanne 156a-b, 160a-b de manière appropriée.

Chaque système de réchauffement 158a-b assure par exemple la transformation du dihydrogène liquide à très basse température (de l'ordre de 20K) en du dihydrogène gazeux à une température de 100K à 500K, de préférence entre 200K et 300K.

Chaque système de réchauffement 158a-b assure le réchauffement du dihydrogène tout en assurant la disponibilité de la poussée du moteur en cas de besoin. Par exemple, chaque système de réchauffement 158a-b est à lui seul capable de réchauffer suffisamment de dihydrogène pour assurer que le moteur 108 produit au moins la moitié de la poussée demandée lors des phases critiques (par exemple le décollage) et de réchauffer suffisamment de dihydrogène pour assurer que le moteur 108 produit la poussée demandée lors des phases non-critiques (par exemple la croisière).

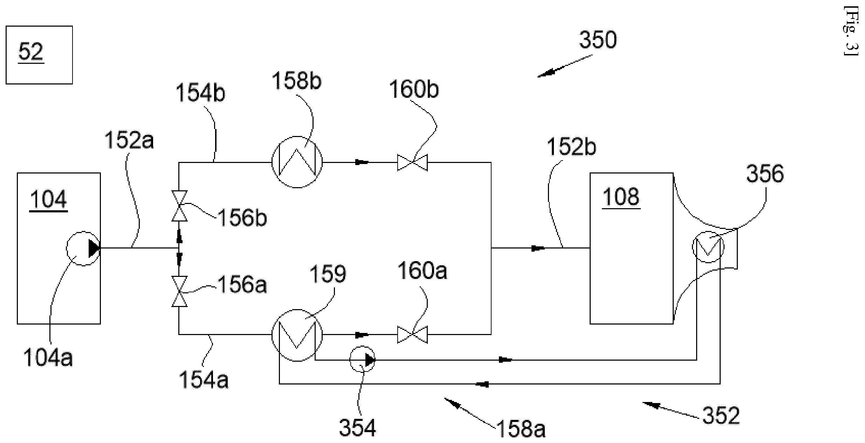

Selon un mode de réalisation, plusieurs réservoirs peuvent être connectés en série ou en parallèle à chaque installation de réchauffement sur la première canalisation d'apport 152a. La Fig. 3 montre une variante de l'installation de réchauffement 350 dans laquelle le premier système de réchauffement 158a comporte un premier échangeur thermique 159 traversé par la première canalisation de dérivation 154a correspondante, c'est-à-dire que cette dernière entre par une première entrée dudit premier échangeur thermique 159 et sort par une première sortie dudit premier échangeur thermique 159. Le premier échangeur thermique 159 est disposé entre la première vanne 156a et la deuxième vanne 160a.

Le premier système de réchauffement 158a comporte un deuxième échangeur thermique 356 et une boucle 352 dans laquelle circule un fluide caloporteur, ici par l'intermédiaire d'une pompe 354, où la boucle 352 traverse le deuxième échangeur thermique 356 qui assure le transfert de calories du moteur 108 vers le fluide caloporteur et où la boucle 352 traverse le premier échangeur thermique 159 en entrant par une deuxième entrée dudit premier échangeur thermique 159 et en sortant par une deuxième sortie dudit premier échangeur thermique 159. La boucle 352 traverse le deuxième échangeur thermique 356 en entrant par une première entrée dudit deuxième échangeur thermique 356 et en sortant par une première sortie dudit deuxième échangeur thermique 356.

Ainsi, les calories prélevées au niveau du moteur 108 réchauffent le dihydrogène à travers le premier échangeur thermique 159.

Les calories du moteur 108 peuvent être prélevées dans les gaz d'échappement de la tuyère du moteur 108 et/ou dans l'huile du moteur 108.

La même installation peut être réalisée pour le deuxième système de réchauffement 158b et il y a alors un autre premier échangeur thermique 159 et une boucle 352 pour chaque système de réchauffement 158a-b.

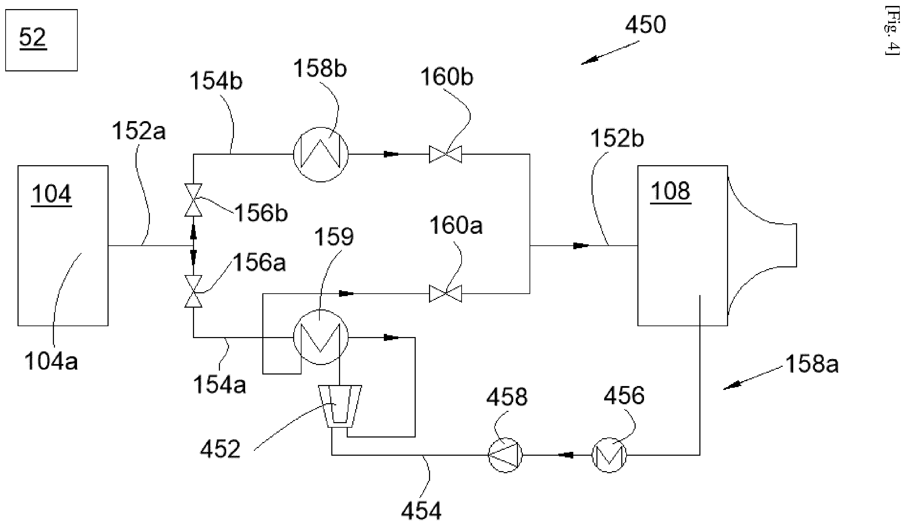

La Fig. 4 montre une variante de l'installation de réchauffement 450 dans laquelle le premier système de réchauffement 158a comporte un échangeur thermique 159 traversé par la première canalisation de dérivation 154a correspondante, c'est-à-dire que cette dernière entre par une première entrée dudit échangeur thermique 159 et sort par une première sortie dudit échangeur thermique 159. Le premier échangeur thermique 159 est disposé entre la première vanne 156a et la deuxième vanne 160a.

En aval dudit échangeur thermique 159, le système de réchauffement 158a comporte une préchambre de combustion 452 montée sur la première canalisation de dérivation 154a et dans laquelle le dihydrogène gazeux est mélangé à de l'air apporté à la préchambre de combustion 452 par une canalisation d'approvisionnement 454 du système de réchauffement 158a.

Dans la préchambre de combustion 452, un système d'allumage assure le démarrage de la combustion du mélange dihydrogène et dioxygène de l'air, cette combustion étant ensuite autoentretenue.

Le mélange en sortie de la préchambre de combustion 452 est introduit dans une deuxième entrée dudit échangeur thermique 159 et en sort par une deuxième sortie pour rejoindre la deuxième vanne 160a à travers la canalisation de dérivation 154a.

Le réchauffement du dihydrogène s'effectue alors par transfert de calories au niveau de l'échangeur thermique 159 où le dihydrogène venant du réservoir 104 est réchauffé et où le mélange sortant de la préchambre de combustion 452 est refroidi avant son injection dans le moteur 108.

La même installation peut être réalisée pour le deuxième système de réchauffement 158b et il y a alors un autre échangeur thermique 159 et une préchambre de combustion 452 pour chaque système de réchauffement 158a-b.

Selon un mode de réalisation particulier, l'air qui est apporté par la canalisation d'approvisionnement 454 est prélevé au niveau du compresseur du moteur 108 où la canalisation d'approvisionnement 454 en air est fluidiquement connectée entre la préchambre de combustion 452 et le compresseur du moteur 108 en particulier le compresseur haute pression. Le système de réchauffement 158a comporte, installés sur la canalisation d'approvisionnement 454, un refroidisseur 456 pour abaisser la température de l'air et un compresseur 458 pour augmenter sa pression. Dans le mode de réalisation de l'invention présenté sur la Fig. 4, le refroidisseur 456 est en amont du compresseur 458 par rapport au sens de l'écoulement de l'air dans la canalisation d'approvisionnement 454, mais des positions inverses sont possibles.

Le mélange présent dans la préchambre de combustion 452 présente du dihydrogène en excès par rapport au dioxygène et les gaz de combustion qui en sortent comprennent majoritairement du dihydrogène, de l'eau et de l'azote et la totalité du dioxygène de l'air a été consommé et transformé en eau.

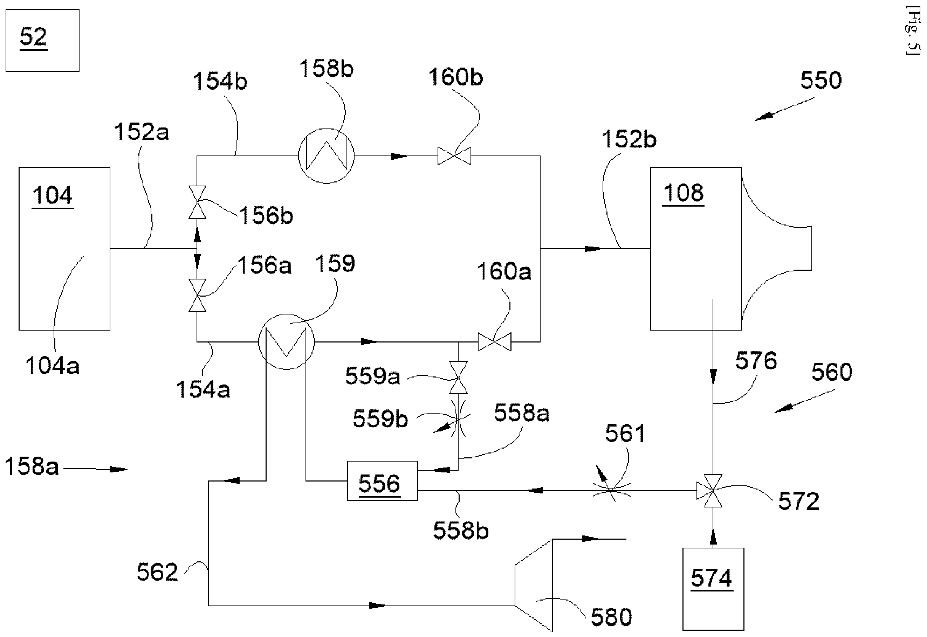

La Fig. 5 montre une variante de l'installation de réchauffement 550 dans laquelle le premier système de réchauffement 158a comporte un premier échangeur thermique 159 traversé par la première canalisation de dérivation 154a correspondante, c'est-à-dire que cette dernière entre par une première entrée dudit premier échangeur thermique 159 et sort par une première sortie dudit premier échangeur thermique 159. Le premier échangeur thermique 159 est disposé entre la première vanne 156a et la deuxième vanne 160a.

Le premier système de réchauffement 158a comporte un brûleur 556 dans lequel des gaz sont brûlés. Les gaz présents sont du dihydrogène et du dioxygène de l'air où le dioxygène est en excès par rapport au dihydrogène qui est alors entièrement brûlé et transformé en eau.

D'une manière générale, un brûleur 556 comporte une première entrée pour l'introduction d'un premier gaz à brûler, une deuxième entrée pour l'introduction d'un deuxième gaz à brûler et une sortie pour l'extraction des gaz issus de la combustion. Le brûleur 556 est ainsi un brûleur à combustion pauvre, c'est-à-dire que le dioxygène est en excès par rapport au dihydrogène. Un système d'allumage assure que la combustion du mélange dihydrogène et dioxygène de l'air démarre, cette combustion étant ensuite autoentretenue.

Le premier système de réchauffement 158a comporte une première sous-canalisation 558a fluidiquement connectée entre la première entrée du brûleur 556 et la première canalisation de dérivation 154a, pour l'approvisionnement en hydrogène du brûleur 556. La connexion de la première sous-canalisation 558a à la canalisation de dérivation 154a est localisée entre le premier échangeur thermique 159 et la deuxième vanne 160a.

Le premier système de réchauffement 158a comporte une deuxième sous-canalisation 558b fluidiquement connectée entre une source d'air pressurisé 560 et la deuxième entrée du brûleur 556.

Le premier système de réchauffement 158a comporte une canalisation d'extraction 562, ou canalisation d'évacuation, fluidiquement connectée entre la sortie du brûleur 556 et l'environnement extérieur et qui, entre ladite sortie et ledit environnement extérieur, traverse le premier échangeur thermique 159 en entrant par une deuxième entrée du premier échangeur thermique 159 et en sortant par une deuxième sortie du premier échangeur thermique 159.

La même installation peut être réalisée pour le deuxième système de réchauffement 158b et il y a alors un autre échangeur thermique 159 et un brûleur 556 pour chaque système de réchauffement 158a-b.

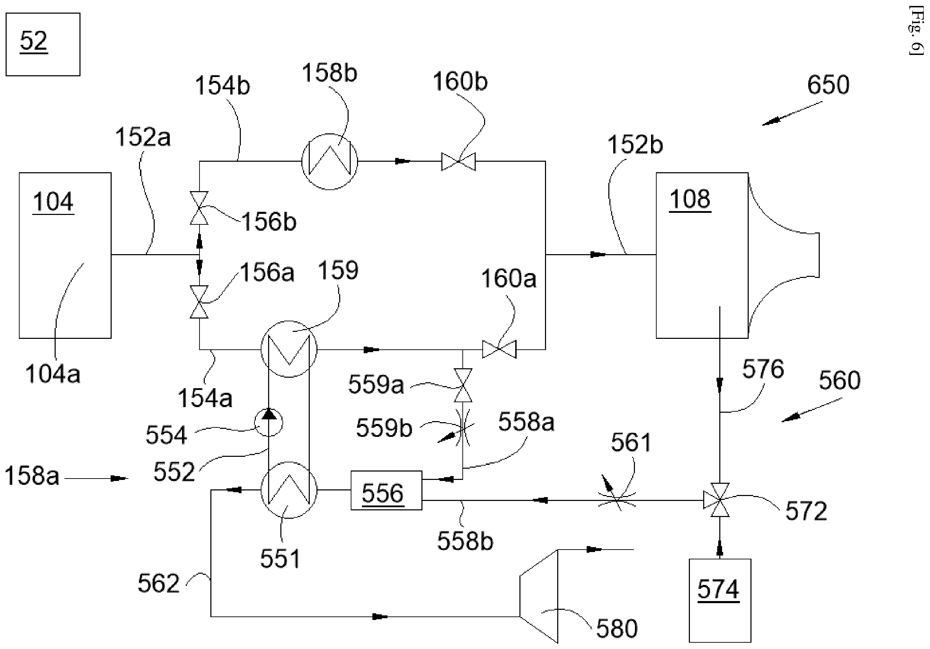

La Fig. 6 montre une variante de l'installation de réchauffement 650, dérivée du mode de réalisation de la Fig. 5, dans laquelle le premier système de réchauffement 158a comporte un premier échangeur thermique 159 traversé par la première canalisation de dérivation 154a correspondante, c'est-à-dire que cette dernière entre par une première entrée dudit premier échangeur thermique 159 et sort par une première sortie dudit premier échangeur thermique 159. Le premier échangeur thermique 159 est disposé entre la première vanne 156a et la deuxième vanne 160a.

Le premier système de réchauffement 158a comporte un deuxième échangeur thermique 551 et une boucle 552 dans laquelle circule un fluide caloporteur, ici par l'intermédiaire d'une pompe ou un compresseur 554, où la boucle 552 traverse successivement le premier échangeur thermique 159 et le deuxième échangeur thermique 551. La boucle 552 entre par une deuxième entrée du premier échangeur thermique 159 et sort par une deuxième sortie du premier échangeur thermique 159, et elle entre par une première entrée du deuxième échangeur thermique 551 et sort par une première sortie du deuxième échangeur thermique 551.

Le premier système de réchauffement 158a comporte un brûleur 556 dans lequel des gaz sont brûlés. Le brûleur 556 comporte une première entrée pour l'introduction d'un premier gaz à brûler, une deuxième entrée pour l'introduction d'un deuxième gaz à brûler et une sortie pour l'extraction des gaz issus de la combustion. Le brûleur 556 est ainsi un brûleur à combustion pauvre comme celui décrit ci-dessus.

Le premier système de réchauffement 158a comporte une première sous-canalisation 558a fluidiquement connectée entre la première entrée du brûleur 556 et la première canalisation de dérivation 154a, entre le premier échangeur thermique 159 et la deuxième vanne 160a.

Le premier système de réchauffement 158a comporte une deuxième sous-canalisation 558b fluidiquement connectée entre une source d'air pressurisé 560 et la deuxième entrée du brûleur 556.

Le premier système de réchauffement 158a comporte une canalisation d'extraction 562 fluidiquement connectée entre la sortie du brûleur 556 et l'environnement extérieur et qui, entre ladite sortie et ledit environnement extérieur, traverse le deuxième échangeur thermique 551 en entrant par une deuxième entrée du deuxième échangeur thermique 551 et en sortant par une deuxième sortie du deuxième échangeur thermique 551.

La même installation peut être réalisée pour le deuxième système de réchauffement 158b et il y a alors un autre premier échangeur thermique 159 et un brûleur 556 pour chaque système de réchauffement 158a-b.

Dans chacun des modes de réalisation des Figs. 5 et 6, pour réguler la quantité de dihydrogène prélevé par la première sous-canalisation 558a au niveau de la première canalisation de dérivation 154a, la première sous-canalisation 558a est équipée d'un système de régulation de débit commandé par l'unité de contrôle 52 et qui permet de contrôler le débit de dihydrogène prélevé. Le système de régulation comporte ici successivement à partir de la première canalisation de dérivation 154a, une vanne de régulation 559a et un dispositif de régulation de débit 559b qui sont commandés par l'unité de contrôle 52 et où le dispositif de régulation de débit 559b peut prendre la forme d'une vanne de régulation de débit ou la forme d'un trou calibré.

Dans chacun de ces modes, une fraction du dihydrogène prélevé dans la première canalisation de dérivation 154a est brûlée dans le brûleur 556 avec l'air pressurisé. Les gaz issus de la combustion réchauffent le dihydrogène à travers le premier échangeur thermique 159 directement dans le cas de la Fig. 5 ou à travers la boucle 552 dans le cas de la Fig. 6 avant d'être transportés jusqu'à l'environnement extérieur.

Dans les modes de réalisation des Figs. 5 et 6, la source d'air pressurisé 560 comporte une vanne à trois voies 572 commandée par l'unité de contrôle 52. Une première voie de la vanne à trois voies 572 est fluidiquement connectée à une source d'air pressurisé 574, une deuxième voie de la vanne à trois voies 572 est fluidiquement connectée à un compresseur du moteur 108 et une troisième voie de la vanne à trois voies 572 est fluidiquement connectée à la deuxième sous-canalisation 558b. Selon un mode de réalisation alternatif non représenté, le compresseur du moteur peut être remplacé par une ou plusieurs autres sources d'air pressurisé.

La source d'air pressurisé 574 fournit de l'air sous pression et il peut s'agir d'un réservoir sous pression, d'un compresseur embarqué, etc.

La source d'air pressurisé 574 est ainsi fluidiquement connectée à la première voie de la vanne à trois voies 572 et une canalisation d'air 576 est fluidiquement connectée entre le moteur 108 et la deuxième voie de la vanne à trois voies 572.

Le prélèvement d'air au niveau du moteur 108 est effectué préférentiellement au niveau intermédiaire du compresseur haute pression, ou en sortie du compresseur basse pression, ou au niveau du circuit d'alimentation de l'air conditionné.

Avec un tel arrangement, l'alimentation en air peut s'effectuer au travers de la canalisation d'air 576 lorsque le moteur 108 fonctionne et par la source d'air pressurisé 574 lorsque le moteur 108 est à l'arrêt ou indisponible.

Dans les modes de réalisation de l'invention présentés aux Figs. 5 et 6, une vanne de régulation de débit 561 commandée par l'unité de contrôle 52 est arrangée sur la deuxième sous-canalisation 558b.

Dans les modes de réalisation de l'invention présentés aux Figs. 5 et 6, la pression en sortie du brûleur 556 est supérieure à la pression de l'air ambiant et une turbine 580 est arrangée sur la canalisation d'extraction 562 entre l'environnement extérieur et, selon le cas, le premier échangeur thermique 159 ou le deuxième échangeur thermique 551, pour réduire la pression et récupérer de l'énergie électrique à travers une génératrice électrique couplée à la turbine 580.

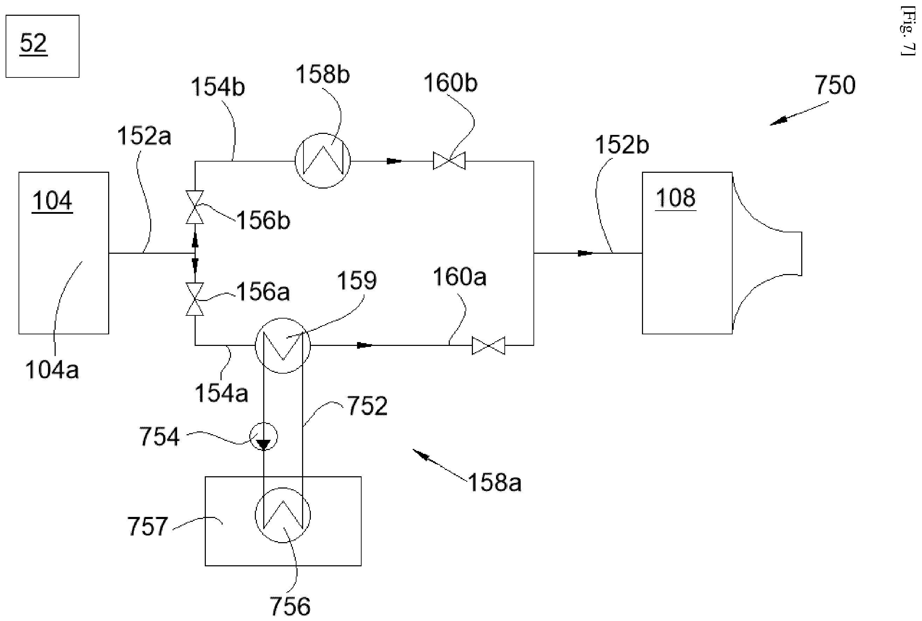

La Fig. 7 montre une variante de l'installation de réchauffement 750 dans laquelle le premier système de réchauffement 158a comporte un premier échangeur thermique 159 traversé par la première canalisation de dérivation 154a correspondante, c'est-à-dire que cette dernière entre par une première entrée dudit premier échangeur thermique 159 et sort par une première sortie dudit premier échangeur thermique 159. Le premier échangeur thermique 159 est disposé entre la première vanne 156a et la deuxième vanne 160a.

Le premier système de réchauffement 158a comporte une boucle 752 dans laquelle circule un fluide caloporteur, ici par l'intermédiaire d'une pompe 754 ou d'un recirculateur, où la boucle 752 traverse un deuxième échangeur thermique 756 qui assure le transfert de calories d'un dispositif 757 de l'aéronef 100 vers le fluide caloporteur et où la boucle 752 traverse le premier échangeur thermique 159 en entrant par une deuxième entrée dudit premier échangeur thermique 159 et en sortant par une deuxième sortie dudit premier échangeur thermique 159. La boucle 752 traverse le deuxième échangeur thermique 756 en entrant par une première entrée dudit deuxième échangeur thermique 756 et en sortant par une première sortie dudit deuxième échangeur thermique 756. Le deuxième échangeur thermique 756 assure le transfert de calories du dispositif 757 logé dans l'aéronef 100 vers le fluide caloporteur.

Le dispositif 757 est par exemple un générateur auxiliaire de puissance, une pile à combustible, le système de conditionnement d'air ou tout système embarqué à l'intérieur de l'aéronef 100, c'est-à-dire dans le fuselage 102, les ailes 106 ou dans une nacelle du moteur 108.

Ainsi, les calories prélevées au niveau du dispositif 757 réchauffent le dihydrogène à travers le premier échangeur thermique 159.

La même installation peut être réalisée pour le deuxième système de réchauffement 158b et il y a alors un autre premier échangeur thermique 159 et une boucle 752 pour chaque système de réchauffement 158a-b.

Les modes de réalisation des Figs. 3 et 7 peuvent être généralisés de manière à ce que le deuxième échangeur thermique 356, 756 soit arrangé près d'une source de chaleur (le moteur 108 dans le cas de la Fig. 3, le dispositif 757 dans le cas de la Fig. 7) et il assure le transfert de calories de la source de chaleur 108, 757 vers le fluide caloporteur. La source de chaleur est plus chaude que le fluide caloporteur.

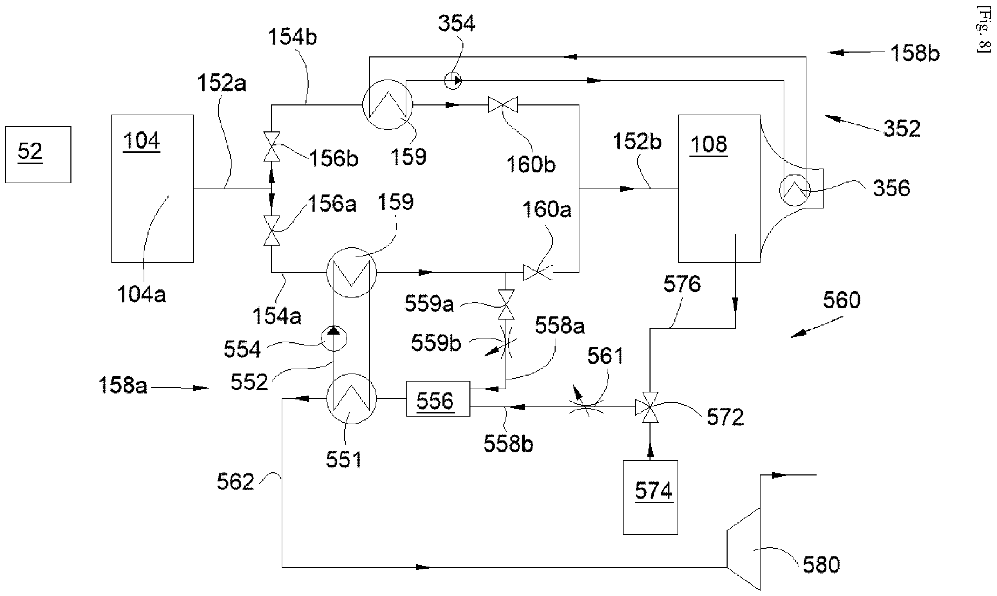

La Fig. 8 montre un mode de réalisation dans lequel les deux systèmes de réchauffement 158a-b sont différents. Dans le mode de réalisation de l'invention présenté à la Fig. 8, le premier système de réchauffement 158a est conforme à celui décrit à la Fig. 6 et le deuxième système de réchauffement 158b est conforme à celui décrit à la Fig. 3. Bien sûr, il est possible de remplacer chacun de ces systèmes de réchauffement 158a-b par l'un ou l'autre des systèmes de réchauffement 158a-b décrits dans les différentes Figs. 3 à 7.

En utilisant deux technologies différentes pour chaque système de réchauffement 158a-b, l'installation de réchauffement 150, 350, 450 est plus résiliente à un éventuel problème sur une des technologies ou un mode de fonctionnement particulier. Par exemple, certaines technologies peuvent être utilisées que le moteur 108 soit en fonctionnement ou arrêté et peuvent permettre de redémarrer le moteur 108.

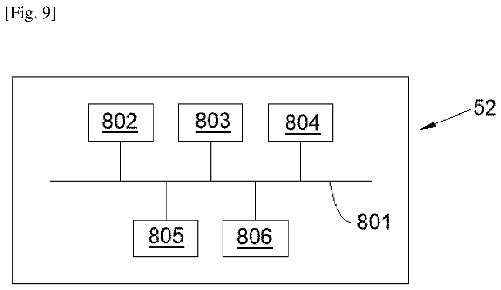

Selon un mode de réalisation particulier représenté à la Fig. 9, l'unité de contrôle 52 comporte, reliés par un bus de communication 801 : un processeur 802 ou CPU (« Central Processing Unit » en anglais) ; une mémoire vive RAM 803 (« Random Access Memory » en anglais) ; une mémoire morte ROM 804 ou Flash (« Read Only Memory » en anglais) ; une unité de stockage 805 telle qu'un disque dur ou un lecteur de support de stockage, tel qu'un lecteur de cartes SD (« Secure Digital » en anglais) ; au moins une interface de communication 806 , permettant par exemple à l'unité de contrôle de communiquer avec les vannes, le moteur, les pompes, ....

Le processeur est capable d'exécuter des instructions chargées dans la RAM à la mise sous tension à partir de la ROM ou de la Flash, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus. Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Installation de réchauffement (550) pour un aéronef (100) comportant un réservoir (104) dans lequel est stocké du dihydrogène, un moteur (108), une unité de contrôle (52), une première canalisation d'apport (152a) fluidiquement connectée à la sortie du réservoir (104), et une deuxième canalisation d'apport (152b) fluidiquement connectée à l'entrée du moteur (108), l'installation de réchauffement (550) comportant :
- une première canalisation de dérivation (154a) fluidiquement connectée entre la première canalisation d'apport (152a) et la deuxième canalisation d'apport (152b), et
- une deuxième canalisation de dérivation (154b) fluidiquement connectée entre la première canalisation d'apport (152a) et la deuxième canalisation d'apport (152b),
où sur chaque canalisation de dérivation (154a-b) sont montés en série de l'amont vers l'aval, une première vanne (156a-b), un système de réchauffement (158a-b) et une deuxième vanne (160a-b) qui sont destinés à être commandés par l'unité de contrôle (52),
l'installation de réchauffement (550) étant **caractérisée en ce qu'**au moins un des systèmes de réchauffement (158a-b) comporte un premier échangeur thermique (159) traversé par la première canalisation de dérivation (154a-b) correspondante, un brûleur (556) comportant une première entrée, une deuxième entrée et une sortie, une première sous-canalisation (558a) fluidiquement connectée entre la première canalisation de dérivation (154a-b) correspondante et la première entrée du brûleur (556), une deuxième sous-canalisation (558b) fluidiquement connectée entre une source d'air pressurisé (560) et la deuxième entrée du brûleur (556), une canalisation d'extraction (562) destinée à être fluidiquement connectée entre la sortie du brûleur (556) et l'environnement extérieur et qui, entre ladite sortie et ledit environnement extérieur, traverse le premier échangeur thermique (159).

2. Installation de réchauffement (450) pour un aéronef (100) comportant un réservoir (104) dans lequel est stocké du dihydrogène, un moteur (108), une unité de contrôle (52), une première canalisation d'apport (152a) fluidiquement connectée à la sortie du réservoir (104), et une deuxième canalisation d'apport (152b) fluidiquement connectée à l'entrée du moteur (108), l'installation de réchauffement (450) comportant :
- une première canalisation de dérivation (154a) fluidiquement connectée entre la première canalisation d'apport (152a) et la deuxième canalisation d'apport (152b), et
- une deuxième canalisation de dérivation (154b) fluidiquement connectée entre la première canalisation d'apport (152a) et la deuxième canalisation d'apport (152b),
où sur chaque canalisation de dérivation (154a-b) sont montés en série de l'amont vers l'aval, une première vanne (156a-b), un système de réchauffement (158a-b) et une deuxième vanne (160a-b) qui sont destinés à être commandés par l'unité de contrôle (52),
l'installation de réchauffement (450) étant **caractérisée en ce qu'**au moins un des systèmes de réchauffement (158a-b) comporte un échangeur thermique (159) traversé par la canalisation de dérivation (154a-b) correspondante, une préchambre de combustion (452) montée sur la canalisation de dérivation (154a-b) correspondante en aval dudit échangeur thermique (159), et une canalisation d'approvisionnement (454) qui apporte de l'air dans la préchambre de combustion (452), où en sortie de la préchambre de combustion (452), la canalisation de dérivation (154a-b) traverse l'échangeur thermique (159) pour rejoindre la deuxième vanne (160a-b).

3. Installation de réchauffement (650) pour un aéronef (100) comportant un réservoir (104) dans lequel est stocké du dihydrogène, un moteur (108), une unité de contrôle (52), une première canalisation d'apport (152a) fluidiquement connectée à la sortie du réservoir (104), et une deuxième canalisation d'apport (152b) fluidiquement connectée à l'entrée du moteur (108), l'installation de réchauffement (650) comportant :
- une première canalisation de dérivation (154a) fluidiquement connectée entre la première canalisation d'apport (152a) et la deuxième canalisation d'apport (152b), et
- une deuxième canalisation de dérivation (154b) fluidiquement connectée entre la première canalisation d'apport (152a) et la deuxième canalisation d'apport (152b),
où sur chaque canalisation de dérivation (154a-b) sont montés en série de l'amont vers l'aval, une première vanne (156a-b), un système de réchauffement (158a-b) et une deuxième vanne (160a-b) qui sont destinés à être commandés par l'unité de contrôle (52),
l'installation de réchauffement (650) étant **caractérisée en ce qu'**au moins un des systèmes de réchauffement (158a-b) comporte un premier échangeur thermique (159) traversé par la première canalisation de dérivation (154a-b) correspondante, un deuxième échangeur thermique (551), une boucle (552) dans laquelle circule un fluide caloporteur et qui traverse successivement le premier échangeur thermique (159) et le deuxième échangeur thermique (551), un brûleur (556) comportant une première entrée, une deuxième entrée et une sortie, une première sous-canalisation (558a) fluidiquement connectée entre la première canalisation de dérivation (154a-b) correspondante et la première entrée du brûleur (556), une deuxième sous-canalisation (558b) fluidiquement connectée entre une source d'air pressurisé (560) et la deuxième entrée du brûleur (556), une canalisation d'extraction (562) destinée à être fluidiquement connectée entre la sortie du brûleur (556) et l'environnement extérieur et qui, entre ladite sortie et ledit environnement extérieur, traverse le deuxième échangeur thermique (551).

4. Installation de réchauffement (450) selon la revendication 2, **caractérisée en ce que** la canalisation d'approvisionnement (454) en air est destinée à être fluidiquement connectée entre un compresseur du moteur (108) et la préchambre de combustion (452) et **en ce que**, entre le moteur (108) et la préchambre de combustion (452), le système de réchauffement (158a-b) comporte un refroidisseur (456) et un compresseur (458) installés sur la canalisation d'approvisionnement (454).

5. Installation de réchauffement (550, 650) selon l'une des revendications 1 ou 3, **caractérisée en ce que** la source d'air pressurisé (560) comporte une vanne à trois voies (572) commandée par l'unité de contrôle (52) dont une première voie de la vanne à trois voies (572) est destinée à être fluidiquement connectée à une source d'air pressurisé (574), dont une deuxième voie de la vanne à trois voies (572) est destinée à être fluidiquement connectée à un compresseur du moteur (108) et dont une troisième voie de la vanne à trois voies (572) est fluidiquement connectée à la deuxième sous-canalisation (558b).

6. Installation de réchauffement (550, 650) selon l'une des revendications 1 ou 3 ou 5, **caractérisée en ce qu'**une turbine (580) couplée à une génératrice électrique est arrangée sur la canalisation d'extraction (562) entre l'environnement extérieur et, selon le cas, le premier échangeur thermique (159) ou le deuxième échangeur thermique (551).

7. Installation de réchauffement (450, 550, 650) selon l'une des revendications précédentes, **caractérisée en ce que** les deux systèmes de réchauffement (158a-b) sont différents.

8. Aéronef (100) comportant :
- un réservoir (104) dans lequel est stocké du dihydrogène,
- un moteur (108),
- une unité de contrôle (52),
- une première canalisation d'apport (152a) fluidiquement connectée à la sortie du réservoir (104),
- une deuxième canalisation d'apport (152b) fluidiquement connectée à l'entrée du moteur (108), et
- une installation de réchauffement (450, 550, 650) selon l'une des revendications précédentes, où la première canalisation de dérivation (154a) est fluidiquement connectée entre la première canalisation d'apport (152a) et la deuxième canalisation d'apport (152b), et où la deuxième canalisation de dérivation (154b) est fluidiquement connectée entre la première canalisation d'apport (152a) et la deuxième canalisation d'apport (152b).

## Patentansprüche

1. Heizanlage (550) für ein Luftfahrzeug (100), umfassend einen Tank (104), in dem Wasserstoff gespeichert ist, ein Triebwerk (108), eine Steuereinheit (52), eine erste Zuführleitung (152a), die an den Auslass des Tanks (104) fluidisch angeschlossen ist, und eine zweite Zuführleitung (152b), die an den Einlass des Triebwerks (108) fluidisch angeschlossen ist, die Heizanlage (550) umfassend:
- eine erste Abzweigleitung (154a), die zwischen der ersten Zuführleitung (152a) und der zweiten Zuführleitung (152b) fluidisch angeschlossen ist, und
- eine zweite Abzweigleitung (154b), die zwischen der ersten Zuführleitung (152a) und der zweiten Zuführleitung (152b) fluidisch angeschlossen ist,
wobei an jeder Abzweigleitung (154a-b) von stromaufwärts nach stromabwärts ein erstes Ventil (156a-b), ein Heizsystem (158a-b) und ein zweites Ventil (160a-b), die dazu bestimmt sind, von der Steuereinheit (52) gesteuert zu werden, in Reihe montiert sind,
wobei die Heizanlage (550) **dadurch gekennzeichnet ist, dass** mindestens eines der Heizsysteme (158a-b) einen ersten Wärmetauscher (159), der von der entsprechenden ersten Abzweigleitung (154a-b) durchquert wird, einen Brenner (556), der einen ersten Einlass, einen zweiten Einlass und einen Auslass umfasst, eine erste Teilleitung (558a), die fluidisch zwischen der entsprechenden ersten Abzweigleitung (154a-b) und dem ersten Einlass des Brenners (556) angeschlossen ist, eine zweite Teilleitung (558b), die fluidisch zwischen einer Druckluftquelle (560) und dem zweiten Einlass des Brenners (556) angeschlossen ist, eine Abzugsleitung (562), die dazu bestimmt ist, fluidisch zwischen dem Auslass des Brenners (556) und der Außenumgebung angeschlossen zu werden, und die, zwischen dem Auslass und der Außenumgebung, den ersten Wärmetauscher (159) durchquert, umfasst.

2. Heizanlage (450) für ein Luftfahrzeug (100), umfassend einen Tank (104), in dem Wasserstoff gespeichert ist, ein Triebwerk (108), eine Steuereinheit (52), eine erste Zuführleitung (152a), die an den Auslass des Tanks (104) fluidisch angeschlossen ist, und eine zweite Zuführleitung (152b), die an den Einlass des Triebwerks (108) fluidisch angeschlossen ist, die Heizanlage (450) umfassend:
- eine erste Abzweigleitung (154a), die zwischen der ersten Zuführleitung (152a) und der zweiten Zuführleitung (152b) fluidisch angeschlossen ist, und
- eine zweite Abzweigleitung (154b), die zwischen der ersten Zuführleitung (152a) und der zweiten Zuführleitung (152b) fluidisch angeschlossen ist,
wobei an jeder Abzweigleitung (154a-b) von stromaufwärts nach stromabwärts ein erstes Ventil (156a-b), ein Heizsystem (158a-b) und ein zweites Ventil (160a-b), die dazu bestimmt sind, von der Steuereinheit (52) gesteuert zu werden, in Reihe montiert sind,
wobei die Heizanlage (450) **dadurch gekennzeichnet ist, dass** mindestens eines der Heizsysteme (158a-b) einen Wärmetauscher (159), der von der entsprechenden Abzweigleitung (154a-b) durchquert wird, eine Verbrennungsvorkammer (452), die an der entsprechenden Abzweigleitung (154a-b) stromab des Wärmetauschers (159) montiert ist, und eine Versorgungsleitung (454), die Luft in die Verbrennungsvorkammer (452) führt, umfasst, wobei am Auslass der Verbrennungsvorkammer (452) die Abzweigleitung (154a-b) den Wärmetauscher (159) durchquert, um das zweite Ventil (160a-b) zu erreichen.

3. Heizanlage (650) für ein Luftfahrzeug (100), umfassend einen Tank (104), in dem Wasserstoff gespeichert ist, ein Triebwerk (108), eine Steuereinheit (52), eine erste Zuführleitung (152a), die an den Auslass des Tanks (104) fluidisch angeschlossen ist, und eine zweite Zuführleitung (152b), die an den Einlass des Triebwerks (108) fluidisch angeschlossen ist, die Heizanlage (650) umfassend:
- eine erste Abzweigleitung (154a), die zwischen der ersten Zuführleitung (152a) und der zweiten Zuführleitung (152b) fluidisch angeschlossen ist, und
- eine zweite Abzweigleitung (154b), die zwischen der ersten Zuführleitung (152a) und der zweiten Zuführleitung (152b) fluidisch angeschlossen ist,
wobei an jeder Abzweigleitung (154a-b) von stromaufwärts nach stromabwärts ein erstes Ventil (156a-b), ein Heizsystem (158a-b) und ein zweites Ventil (160a-b), die dazu bestimmt sind, von der Steuereinheit (52) gesteuert zu werden, in Reihe montiert sind,
wobei die Heizanlage (650) **dadurch gekennzeichnet ist, dass** mindestens eines der Heizsysteme (158a-b) einen ersten Wärmetauscher (159), der von der entsprechenden ersten Abzweigleitung (154a-b) durchquert wird, einen zweiten Wärmetauscher (551), eine Schleife (552), in der ein Wärmeträgerfluid zirkuliert und die nacheinander den ersten Wärmetauscher (159) und den zweiten Wärmetauscher (551) durchquert, einen Brenner (556), der einen ersten Einlass, einen zweiten Einlass und einen Auslass umfasst, eine erste Teilleitung (558a), die fluidisch zwischen der entsprechenden ersten Abzweigleitung (154a-b) und dem ersten Einlass des Brenners (556) angeschlossen ist, eine zweite Teilleitung (558b), die fluidisch zwischen einer Druckluftquelle (560) und dem zweiten Einlass des Brenners (556) angeschlossen ist, eine Abzugsleitung (562), die dazu bestimmt ist, fluidisch zwischen dem Auslass des Brenners (556) und der Außenumgebung angeschlossen zu werden, und die, zwischen dem Auslass und der Außenumgebung, den zweiten Wärmetauscher (551) durchquert, umfasst.

4. Heizanlage (450) nach Anspruch 2, **dadurch gekennzeichnet, dass** die Luftversorgungsleitung (454) dazu bestimmt ist, fluidisch zwischen einem Kompressor des Triebwerks (108) und der Verbrennungsvorkammer (452) angeschlossen zu werden, und dass, zwischen dem Triebwerk (108) und der Verbrennungsvorkammer (452), das Heizsystem (158a-b) einen Kühler (456) und einen Kompressor (458), die an der Versorgungsleitung (454) installiert sind, umfasst.

5. Heizanlage (550, 650) nach einem der Ansprüche 1 oder 3, **dadurch gekennzeichnet, dass** die Druckluftquelle (560) ein Dreiwegeventil (572) umfasst, das von der Steuereinheit (52) gesteuert wird, wobei ein erster Weg des Dreiwegeventils (572) dazu bestimmt ist, an eine Druckluftquelle (574) fluidisch angeschlossen zu werden, wobei ein zweiter Weg des Dreiwegeventils (572) dazu bestimmt ist, an einen Kompressor des Triebwerks (108) fluidisch angeschlossen zu werden, und wobei ein dritter Weg des Dreiwegeventils (572) an die zweite Teilleitung (558b) fluidisch angeschlossen ist.

6. Heizanlage (550, 650) nach einem der Ansprüche 1 oder 3 oder 5, **dadurch gekennzeichnet, dass** eine mit einem elektrischen Generator gekoppelte Turbine (580) an der Abzugsleitung (562) zwischen der Außenumgebung und, je nach Fall, dem ersten Wärmetauscher (159) oder dem zweiten Wärmetauscher (551) angeordnet ist.

7. Heizanlage (450, 550, 650) nach einem der vorhergehenden Ansprüche, **dadurch gekennzeichnet, dass** die beiden Heizsysteme (158a-b) unterschiedlich sind.

8. Luftfahrzeug (100), umfassend:
- einen Tank (104), in dem Wasserstoff gespeichert ist,
- ein Triebwerk (108),
- eine Steuereinheit (52),
- eine erste Zuführleitung (152a), die an den Auslass des Tanks (104) fluidisch angeschlossen ist,
- eine zweite Zuführleitung (152b), die an den Einlass des Triebwerks (108) fluidisch angeschlossen ist, und
- eine Heizanlage (450, 550, 650) nach einem der vorhergehenden Ansprüche, wobei die erste Abzweigleitung (154a) zwischen der ersten Zuführleitung (152a) und der zweiten Zuführleitung (152b) fluidisch angeschlossen ist und wobei die zweite Abzweigleitung (154b) zwischen der ersten Zuführleitung (152a) und der zweiten Zuführleitung (152b) fluidisch angeschlossen ist.

## Claims

1. A heating installation (550) for an aircraft (100) comprising a tank (104) that stores dihydrogen, an engine (108), a control unit (52), a first supply line (152a) fluidly connected to the outlet of the tank (104), and a second supply line (152b) fluidly connected to the inlet of the engine (108), the heating installation (550) comprising:
- a first branch line (154a) fluidly connected between the first supply line (152a) and the second supply line (152b), and
- a second branch line (154b) fluidly connected between the first supply line (152a) and the second supply line (152b),
wherein a first valve (156a-b), a heating system (158a-b) and a second valve (160a-b) are installed on each branch line (154a-b) in series, upstream to downstream, and are intended to be controlled by the control unit (52),
the heating installation (550) being **characterized in that** at least one of the heating systems (158a-b) comprises a first heat exchanger (159) traversed by the corresponding first branch line (154a-b), a burner (556) comprising a first inlet, a second inlet, and an outlet, a first sub-line (558a) fluidly connected between the corresponding first branch line (154a-b) and the first inlet of the burner (556), a second sub-line (558b) fluidly connected between a pressurized air source (560) and the second inlet of the burner (556), an extraction line (562) intended to be fluidly connected between the outlet of the burner (556) and the outside environment and that, between said outlet and said outside environment, traverses the first heat exchanger (159).

2. A heating installation (450) for an aircraft (100) comprising a tank (104) that stores dihydrogen, an engine (108), a control unit (52), a first supply line (152a) fluidly connected to the outlet of the tank (104), and a second supply line (152b) fluidly connected to the inlet of the engine (108), the heating installation (450) comprising:
- a first branch line (154a) fluidly connected between the first supply line (152a) and the second supply line (152b), and
- a second branch line (154b) fluidly connected between the first supply line (152a) and the second supply line (152b),
wherein a first valve (156a-b), a heating system (158a-b) and a second valve (160a-b) are installed on each branch line (154a-b) in series, upstream to downstream, and are intended to be controlled by the control unit (52),
the heating installation (450) being **characterized in that** at least one of the heating systems (158a-b) comprises a heat exchanger (159) traversed by the corresponding branch line (154a-b), a pre-combustion chamber (452) installed on the corresponding branch line (154a-b) downstream of said heat exchanger (159), and a supply line (454) that supplies air into the pre-combustion chamber (452), wherein, at the outlet of the pre-combustion chamber (452), the branch line (154a-b) traverses the heat exchanger (159) in order to join the second valve (160a-b).

3. A heating installation (650) for an aircraft (100) comprising a tank (104) that stores dihydrogen, an engine (108), a control unit (52), a first supply line (152a) fluidly connected to the outlet of the tank (104), and a second supply line (152b) fluidly connected to the inlet of the engine (108), the heating installation (650) comprising:
- a first branch line (154a) fluidly connected between the first supply line (152a) and the second supply line (152b), and
- a second branch line (154b) fluidly connected between the first supply line (152a) and the second supply line (152b),
wherein a first valve (156a-b), a heating system (158a-b) and a second valve (160a-b) are installed on each branch line (154a-b) in series, upstream to downstream, and are intended to be controlled by the control unit (52),
the heating installation (650) being **characterized in that** at least one of the heating systems (158a-b) comprises a first heat exchanger (159) traversed by the corresponding first branch line (154a-b), a second heat exchanger (551), a loop (552), in which a heat transfer fluid circulates and which successively traverses the first heat exchanger (159) and the second heat exchanger (551), a burner (556) comprising a first inlet, a second inlet and an outlet, a first sub-line (558a) fluidly connected between the corresponding first branch line (154a-b) and the first inlet of the burner (556), a second sub-line (558b) fluidly connected between a pressurized air source (560) and the second inlet of the burner (556), an extraction line (562) intended to be fluidly connected between the outlet of the burner (556) and the outside environment and which, between said outlet and said outside environment, traverses the second heat exchanger (551).

4. The heating installation (450) as claimed in claim 2, **characterized in that** the air supply line (454) is intended to be fluidly connected between a compressor of the engine (108) and the pre-combustion chamber (452) and **in that**, between the engine (108) and the pre-combustion chamber (452), the heating system (158a-b) comprises a cooler (456) and a compressor (458) installed on the supply line (454).

5. The heating installation (550, 650) as claimed in any of claims 1 or 3, **characterized in that** the pressurized air source (560) comprises a three-way valve (572) controlled by the control unit (52), with a first channel of the three-way valve (572) being intended to be fluidly connected to a pressurized air source (574), a second channel of the three-way valve (572) being intended to be fluidly connected to a compressor of the engine (108) and a third channel of the three-way valve (572) being fluidly connected to the second sub-line (558b).

6. The heating installation (550, 650) as claimed in any of claims 1 or 3 or 5, **characterized in that** a turbine (580) coupled to an electric generator is arranged on the extraction line (562) between the outside environment and, as applicable, the first heat exchanger (159) or the second heat exchanger (551).

7. The heating installation (450, 550, 650) as claimed in any of the preceding claims, **characterized in that** the two heating systems (158a-b) are different.

8. An aircraft (100) comprising:
- a tank (104) that stores dihydrogen,
- an engine (108),
- a control unit (52),
- a first supply line (152a) fluidly connected to the outlet of the tank (104),
- a second supply line (152b) fluidly connected to the inlet of the engine (108), and
- a heating installation (450, 550, 650) as claimed in any of the preceding claims, wherein the first branch line (154a) is fluidly connected between the first supply line (152a) and the second supply line (152b), and wherein the second branch line (154b) is fluidly connected between the first supply line (152a) and the second supply line (152b).
